# EUROPEAN PATENT APPLICATION

(11) **EP 1 608 135 A1**
(43) Date of publication of application: **21.12.2005**
(21) Application number: 04388038.4
(22) Date of filing: 15.06.2004
(51) Int. Cl.: H04M 1/725, H04N 13/00, G06F 3/033

(54) **Portable communication device with two cameras**

(71) Applicant: Sony Ericsson Mobile Communications AB, 221 88 Lund (SE)
(72) Inventor: Olsson, Stefan, 224 64 Lund (SE); Andersson, Jonas, 222 37 Lund (SE)
(74) Representative: Boesen, Johnny Peder

(57) **Abstract**

The invention relates to the provision of two cameras (10, 12; 13; 14) in a portable communication device (100). The distance and angle between the two cameras (10, 12; 13; 14) are well-known and the cameras (10, 12; 13; 14) are arranged to record simultaneous images of a subject. Subsequently, these simultaneous images can be combined to provide a three dimensional image of the subject, thereby providing enhanced visual information. One advantageous use of such images with enhanced visual information is person identification, e.g. by face recognition. Another advantageous use is the recording of a user interaction with a virtual user interface provided by projection of a representation of a user interface to a surface and registering user interactions with the projected image.

## Description

### Field of the invention

This invention relates to a portable communication device comprising a first camera means. The invention moreover relates to a method of taking images. Finally, the invention relates to the use of the portable communication device for personal identification and the use of the portable communication device for providing a virtual user interface.

### Description of related art

It is well known to equip portable communication devices with camera means so that still pictures/images or video clips can be recorded and/or transmitted to other electronic devices. Since owners of portable communication devices typically bring the devices along most of the time, the camera means is at hand and easily accessible most of the time. Typical uses of camera means in portable communication devices are the taking and storing of images for private or business use, video conferencing, etc.; an example of a more complex use of camera means in a portable communication device is for recording of movements in connection with a virtual display. However, the quality of images recorded with camera means in portable communication devices could be improved in comparison with today's standards.

### Summary of the invention

It is an object of the invention to provide a portable communication device with camera means for providing images with improved quality.

This object among others is achieved when the portable communication device mentioned in the opening paragraph is characterized in further comprising a second camera means, wherein the first and second camera means are displaced by a well-known distance, and further comprising activations means, wherein the first and second camera means, respectively, of the portable communication device are arranged to simultaneously taking a first and a second image, respectively, upon activation of the activation means. The provision of a second camera means displaced by a well-known distance from the first camera means and arranged to record a second image simultaneously with a first image recorded by the first camera means represents the provision of additional information. Typically, this additional information can be used to provide a depth in the recorded images, thus improving the quality of the images recorded.

Preferably, the portable communication device according to the invention further comprises a combination means for combining a first and a second image, respectively, recorded simultaneously by the first and second camera means, respectively, to a three dimensional image. Since means for providing three dimensional images are resident in the portable communication device, such three dimensional images can be recorded, stored and/or transmitted quickly and easily.

In a preferred embodiment, the first and second camera means of the portable communication device according to the invention are arranged to record consecutive pairs of images, said pairs consisting of a first and a second image, respectively, recorded simultaneously by the first and second camera means, respectively. Thus, moving three dimensional images or three dimensional video can be provided.

In yet a preferred embodiment of the invention, the portable communication device further comprises means for transmitting said first and second image recorded by the first and the second camera means to a processing device. Thus, any image processing can be performed outside the portable communication device, thereby saving energy and/or processing power of the portable communication device. Such image processing could be the combination of pairs of images recorded simultaneously by the first and second camera means to three dimensional images. Another example could be user identification by means of face recognition where the combined three dimensional images are compared to pre-stored three dimensional images. The certainty of such user identification based on three dimensional images is enhanced substantially compared to user identification based on two dimensional images. This renders it possible to use the portable communication device is in e.g. payment transactions, wherein the certainty of user identification is of utmost importance.

In the above the combination of the first and second image recorded simultaneously to a three dimensional image has been described. This combination of two images to a three dimensional image is well-known. Different techniques for viewing such three dimensional images are also well-known. For example it is well-known to combine the two images in a way to be watched through a pair of glasses by a viewer. Such glasses could e.g. be colour filter glasses with a different colour filter for each eye, polarizing glasses with two polarizing lenses, which have their polarization axis angled by 90° or LCD shutter glasses with shutters synchronized to a display, on which images intended for the left and the right eye are alternated rapidly, so that each eye only sees the images intended for it.

However, it is preferred that a three dimensional image can be viewed directly without the use of glasses. Thus, it is preferred that the three dimensional images are displayed on a three dimensional or stereoscopic display, where the three dimensional images are showed in a way that the can be viewed immediately. Such three dimensional or stereoscopic displays are known today, providing the possibility to view three dimensional images without glasses or other special gear on a flat screen/display. These three dimensional or stereoscopic displays are marketed by e.g. NVIDIA®, DTI®, Sony®, Philips®, and Siemens®.

Throughout this description it is intended that the combined three dimensional images could be shown to a viewer in any appropriate way, such as on a three dimensional or stereoscopic display or in a traditional way, in which glasses should be used to view the images. Even though the use of a display or screen is described for presenting the three dimensional images, it is also conceivable that the three dimensional images are printed on paper or other unchanging material.

It is well-known to provide a virtual user interface of a portable communication device by projecting an image of a user interface to a surface, registering the interaction between a user and the user interface by means of a camera in the communication device and converting the registered interaction into input to the portable communication device. This is advantageous, in that the user interface on the casing of the portable communication device might be rendered superfluous or the size thereof could be minimized. However, the images recorded of the interaction between a user and the user interface aren't always of sufficient quality to register said interactions with a higher degree of certainty. This drawback is solved by another preferred embodiment of the portable communication device, further comprising means for projecting an image of a user interface to a surface, means for focusing and/or directing the first and second camera means so as to record images of the projected image, means for taking and storing consecutive pairs of images, said pairs consisting of a first and a second image, respectively, recorded simultaneously by the first and second camera means, respectively, and means for converting differences between said consecutive pairs of images into input to the portable communication device. Thus, the pairs of images recorded by means of the first and second camera means provide depth information. Thus, the movements of e.g. a hand or a pencil can be registered with a higher degree of certainty, and therefore the conversion of differences between consecutive pairs of images into input to the portable communication device can be performed with greater certainty. Especially, when the portable communication device comprises two cameras movements corresponding to a click on a computer mouse can be detected with substantially increased certainty.

The invention furthermore relates to a method of taking images with features corresponding to the device described above and thus representing similar advantages.

It should be noted that as used herein, the term "portable communication device" is intended to refer to any portable device comprising communication means, such as mobile telephones, pagers, communicators, i.e. electronic organizers, smartphones or the like.

Moreover, the term "camera means" is intended to refer to any unit comprising a viewfinder and being capable of recording images, i.e. still pictures/images or video. However, this use of the term does not preclude the possibility that storage means and/or means for activation of the camera means can be displaced from the viewfinder.

Moreover, it should be emphasised that the term "comprises/comprising" when used in this specification is recorded to specify the presence of stated features, integers, steps or components but does not preclude the presence or addition of one or more other features, integers, steps, components or groups thereof.

### Brief description of the drawings

The invention will be explained more fully below in connection with examples of preferred embodiments and with reference to the drawing, where like reference numbers denote like elements and in which
Figs. 1 a, 1b and 1 c are schematic drawings of portable communication devices comprising two camera means;
figs. 2a and 2b show two examples of a cross section along the line II-II in fig. 1 c;
fig. 3 is a block diagram schematically showing the elements of a portable communication device according to the invention;
fig. 4 is a block diagram schematically showing the components in a system for performing payment transactions by means of a portable communication device according to the invention; and
fig. 5 is a flow chart of a method of providing a virtual user interface by means of a portable communication device according to the invention.

### Detailed description of embodiments

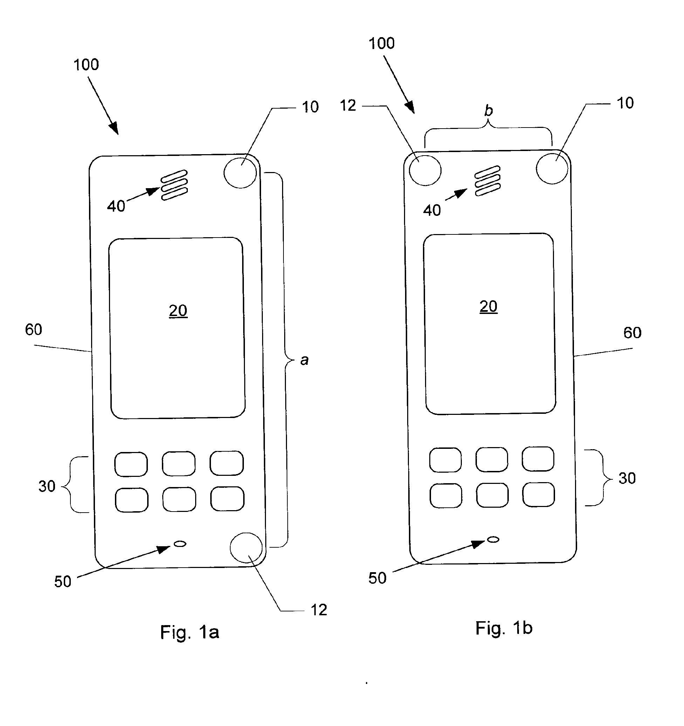

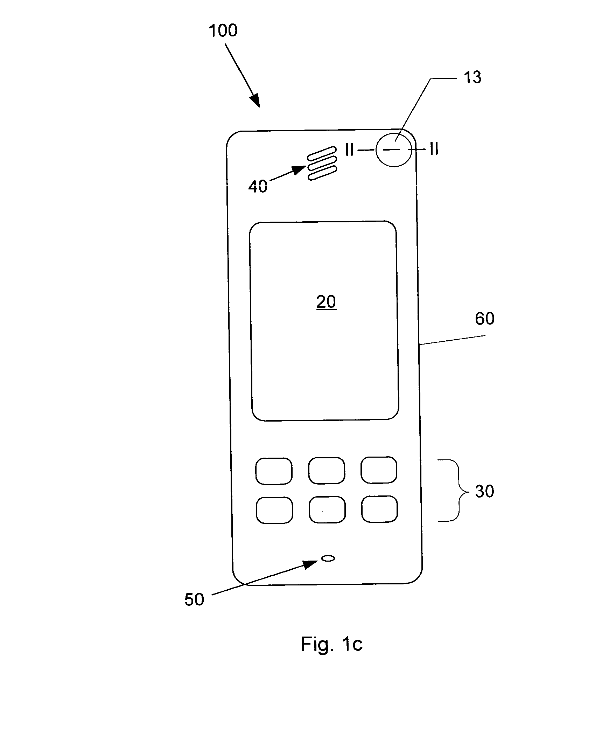

Fig. 1 a is a schematic drawing of a portable communication device 100 comprising two camera means 10, 12 displaced by a distance a. The portable communication device moreover comprises a display 20, a number of input keys 30, a loudspeaker 40, microphone 50 and a casing 60. The camera means 10, 12 are embedded or encased inside the casing 60 of portable communication device 100. The displacement a of the camera means 10, 12 in the portable communication device 100 of fig. 1a is substantially equal to the maximum displacement along one side of the portable communication device 100. It should be noted that the placement and number of keys 30 in the user interface could be different from fig. 1a; e.g. the display 20 could be a touch screen rendering most of or all of the keys superfluous, or the user interface could comprise more keys than shown.

The term "camera means" 10, 12 is meant to cover any unit containing the camera elements needed for creating photographs. Such camera elements could be a chamber, impervious to light, with a light sensitive material and with an opening, typically comprising a shutter, which can regulate the light incident on the light sensitive material. The light sensitive material could be a film or any light sensitive electronic device, such as a CCD (Charge Coupling Device). Further camera elements could be an objective containing one or more lenses and a diaphragm for regulating the light incident to the chamber. Finally, the camera means 10, 12 should be equipped with some kind of activation means or release button, e.g. a button (not shown) at the casing 60 of the portable communication device 100 or an item on a menu shown on the display 20 of the portable communication device 100.

Typically, the camera means 10, 12 might be put in one mode, where one of the camera means 10, 12 is used to record images without simultaneous taking images with the other camera means, and in another mode, where the camera means 10, 12 are taking images simultaneously.

Fig. 1b is another schematic drawing of a portable communication device 100. As in fig. 1a the portable communication device 100 comprises a display 20, a number of input keys 30, a loudspeaker 40, microphone 50 and a casing 60. The portable communication device 100 moreover comprises two camera means 10, 12, which are displaced by a distance b that is smaller distance than the distance a in fig. 1a.

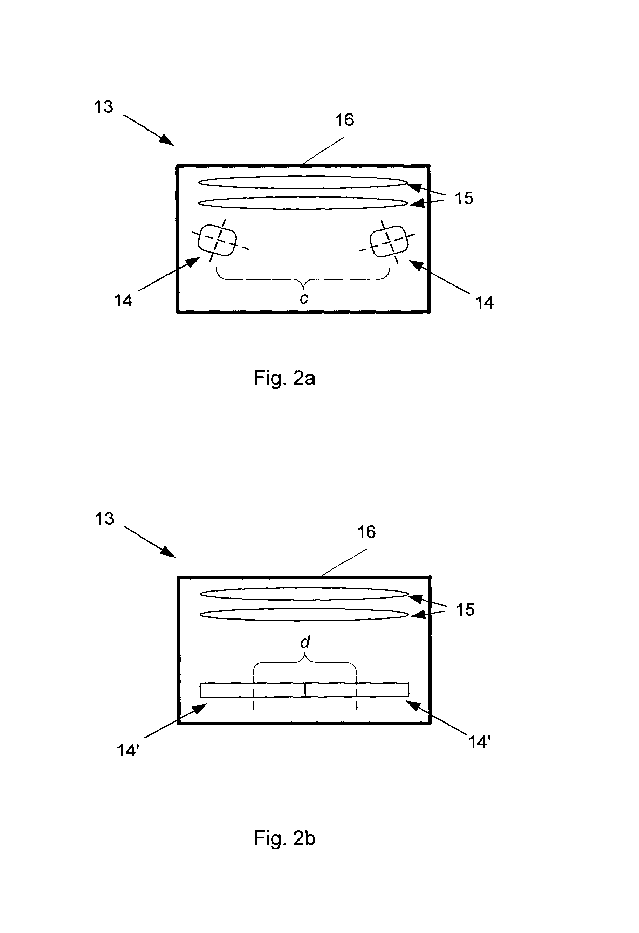

Fig. 1c is another schematic drawing of a portable communication device 100 with display 20, input keys 30, loudspeaker 40, microphone 50 and a casing 60. The portable communication device 100 again comprises two distinct camera means; however, in fig. 1c they are integrated into one camera unit 13 so that the two camera means share some of the camera elements. This is shown in enlarged views in figs. 2a and 2b.

Fig. 2a shows an example of a cross section along the line II-II in fig. 1c, i.e. through the camera means 13. An opening (not shown) is provided in the upper part 16 of the camera means 13. Moreover two lens elements 15 are provided and two camera means 14. Of course, the number of lens elements 15 in figs. 2a and 2b could be different from two, if appropriate. The two camera means 14, displaced by a distance, are arranged for simultaneously taking images. The camera means 14 each comprises light sensitive material, such as a film or any light sensitive electronic device, such as a CCD (Charge Coupling Device). Any remaining camera element necessary for taking images, such as a diaphragm, activation means or release button, shutter, etc., could be shared between the two camera means 14 like the lens elements 15.

In fig. 2a the two camera means 14 are displaced by a distance d, where d indicates the distance between the centres of each of the camera means 14, where the centre is indicated by the crossing of the broken lines in fig. 2a. In fig. 2a the two camera means 14 are shown as being placed angled; this is advantageous, in that it ensures that the two camera means 14 can focus on and record images of subjects. Moreover, the angling of the camera means 14 could be adjustable to ensure the ability to focus on distant as well as nearby subjects.

Fig. 2b shows another example of a cross section along the line II-II in fig. 1c, e.g. through the camera means 13. As in fig. 2a an opening (not shown) is provided in the upper part 16 of the camera means, two lens elements 15 are provided as well as two camera means 14'. Again, further camera element necessary for taking images, such as a diaphragm, activation means or release button, shutter, etc., could be shared like the lens elements 15. In fig. 2b the two camera means 14' are two segments of one CCD camera element/CCD device. In the example the two segments 14' of the CCD device each records an image of the same subject. Thus, two images recorded by the CCD devices 14' displaced by a distance d, where d indicates the distance between the centre of each of the CCD devices 14' indicated by the broken lines in fig. 2b.

In yet an advantageous embodiment of the portable communication device 100 comprising two camera means, a CCD device which is divided into four segments is used. Hereby, four images of the same subject can be recorded simultaneously; the four images can be combined to provide a single image with an improved three dimensional effect. It is conceivable that the CCD device could be divided into more than four segments, each representing a separate camera means taking separate images of the same subject.

The camera means typically 14 and 14', respectively, shown in fig. 2a and 2b, respectively, could be put in one mode, where one of the camera means 14, 14' is used to record images without simultaneous taking images with the other camera means, and in another mode, where the camera means 14, 14' are taking images simultaneously.

The distance, a, b, between the camera elements 10, 12 and the distance between the camera elements 14 or 14' influences the depth information in the images, which result from the combination of images of a subject recorded simultaneously by means of the camera elements. Thus, the depth information obtainable would typically be larger when the portable communication device 100 shown in fig. 1a or 1b is used, compared with the use of the portable communication device 100 shown in fig. 1c. However, the camera elements in the portable communication device 100 shown in fig. 1c have economical and design advantages in relation to the devices shown in figs. 1a and 1b, while still providing enough depth information for creating three dimensional images.

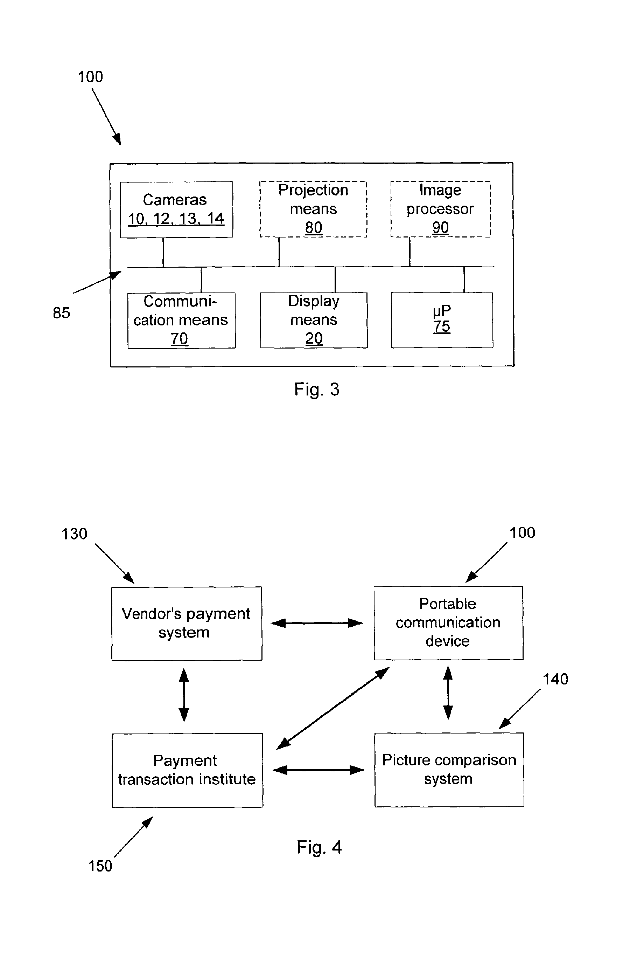

Fig. 3 is a block diagram schematically showing the elements of a portable communication device 100 according to the invention. As described in connection with figs. 1a and 1b, the portable communication device 100 comprises display means 20, e.g. an LCD screen, a touch screen, etc., and two cameras 10, 12. Moreover, the portable communication device 100 comprises communication means 70 for communication between the portable communication device 100 and another device, by means of e.g. GPRS, UMTS, GSM, EDGE, WAP, Bluetooth®, infrared. Optionally, the portable communication device 100 contains a projection means for projecting an image of a user interface, e.g. a QWERTY-keyboard, a computer mouse, a keypad, etc., to a surface. If provided with such projection means 80, the portable communication device 100 should also contain means for focusing and/or directing, e.g. angling, the first and second camera means 10, 12 appropriately, so as to record images of the projected image. When taking series images of the projected image of a user interface by each of the camera means 10, 12, the images can be combined in an image processor 90 to a series of three dimensional images, thus providing depth information. Thus, any differences between consecutive images in the series of three dimensional images can be converted to input to the portable communication device 100 with a high degree of certainty.

Even if no projection means are included in the portable communication device 100, an image processor 90 could be included therein for combining two images recorded by the first and second camera, respectively, to a three dimensional image. This can e.g. be used in for providing secure personal identification, e.g. identification of a face of a person, in that the three dimensionality of the combined image enhances the certainty of such personal identification substantially. However, the two images recorded by the first and second camera 10, 12, respectively, could be transmitted to a remote processing means for remote combination thereof to a three dimensional image. The portable communication device 100 moreover comprises a microprocessor 75 and connection means 85 for connection the elements of the portable communication device 100.

Fig. 4 is a block diagram schematically showing the components in a system for performing payment transactions by means of a portable communication device 100 according to the invention. The portable communication device 100 is equipped with the two cameras 10, 12 for providing three dimensional images that can be used for secure personal identification. If the portable communication device 100 is to be used as a means for performing payment transactions, the user of the device 100 and/or the device 100 should be registered with an account in a payment transaction institute 150, such as a bank. Moreover, a vendor's payment system 130 should be arranged to undertake payments by means of a portable communication device 100. This is well-known and does not form part of this specification. Finally, an image comparison system 140 is arranged to perform face recognition on the basis of pre-stored three dimensional images. In one example, a payment transaction could take place by a vendor's payment system 130 requesting a money transaction from a user carrying the portable communication device 100. The user then initiates or accepts the implementation of the payment transaction, by means of an application on the portable communication device 100, and as a part of the request for the payment transaction, the user records a three dimensional image of his/her face by means of the portable communication device 100. Subsequently, the vendor's payment system 130 or the portable communication device 100 communicates the request for a money transaction together with the three dimensional image to the payment transaction institute 150. The three dimensional image is subsequently transmitted to the image comparison system 140 for face recognition and thus secure identification of the user. The arrows in fig. 4 indicate between any two elements indicate that the two elements can be arranged to communicate with each other, thus the flow of information can differ from what is described above.

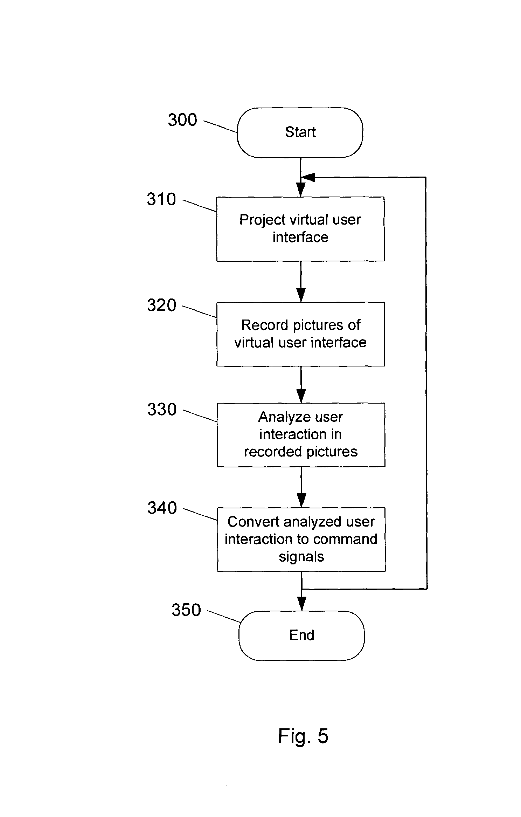

Fig. 5 is a flow chart of a method of providing a virtual user interface by means of a portable communication device according to the invention. The flow starts at step 300 and at step 310 a representation of a user interface, e.g. a QWERTY-keyboard, a computer mouse, a keypad, is projected to a surface, preferably a plane surface, such as a table. Since the position of this projected representation is well-known, the cameras of the portable communication device 100 can be focused and/or directed to the projected representation, and pairs of images of the projected representation of the user interface can be recorded, step 320, said pairs consisting of a first and a second image, respectively, recorded simultaneously by the first and second camera means, respectively. A consecutive series of images are recorded, providing a video sequence of images recorded throughout the time a representation of a user interface is projected by the portable communication device 100. Thus, any user interaction with the projected representation of the user interface is recorded. In step 330 the user interactions, if any, are analysed, e.g. by comparing consecutive images for detecting differences, and in step 340 the analyzed user interaction are converted to command signals input to the portable communication device 100. The flow reverts to step 310 and is repeated until it is turned off, e.g. by a user interaction. The contribution of the invention in this method consists of the provision of the pairs of images mentioned above, which can be combined to three dimensional images and thus can provide visual information in depth. Hereby, an enhanced certainty of the analyzed user interaction is achieved.

## Claims

1. A portable communication device (100) comprising a first camera means (10; 13; 14), **characterized in** further comprising a second camera means (12; 13; 14), wherein the first and second camera means (10, 12; 13; 14) are displaced by a well-known distance (*a; b; c*; *d*), and further comprising activations means, wherein the first and second camera means (10, 12; 13; 14), respectively, of the portable communication device (100) are arranged to simultaneously taking a first and a second image, respectively, upon activation of the activation means.

2. A portable communication device (100) according to claim 1, **characterized in** the device further comprises a combination means for combining a first and a second image, respectively, recorded simultaneously by the first and second camera means (10, 12; 13; 14), respectively, to a three dimensional image.

3. A portable communication device (100) according to claim 1 or 2, **characterized in that** the first and second camera means (10, 12; 13; 14)are arranged to record consecutive pairs of images, said pairs consisting of a first and a second image, respectively, recorded simultaneously by the first and second camera means, respectively.

4. A portable communication device (100) according to any of the claims 1 to 3, **characterized in** further comprising means for transmitting said first and second image recorded by the first and the second camera means (10, 12; 13; 14) to a processing device.

5. A portable communication device (100) according to any of the claims 1 to 3, **characterized in** further comprising means (80) for projecting a representation of a user interface to a surface, means for focusing and/or directing the first and second camera means (10, 12; 13; 14) so as to record images of the projected representation, means for recording and storing consecutive pairs of images, said pairs consisting of a first and a second image, respectively, recorded simultaneously by the first and second camera means (10, 12; 13; 14), respectively, and means for converting differences between said consecutive pairs of images into input to the portable communication device.

6. A method of recording images, **characterized in** simultaneously recording a first and a second image by means of the first and second camera means (10, 12; 13; 14), which are comprised in a portable communication device (100) and displaced by a well-known distance (*a*; *b; c; d*), upon activation of an activation means at the portable communication device.

7. A method according to claim 6, **characterized in** combining the first and second image, respectively, recorded simultaneously by the first and second camera means (10, 12; 13; 14), respectively, to a three dimensional image.

8. A method according to claim 6 or 7, **characterized in** further comprising the steps of initiating the recording of consecutive images by means of the first and second camera means (10, 12; 13; 14), respectively, upon activation of the activation means, and combining the consecutive images recorded by means of the first and second camera means (10, 12; 13; 14), respectively, to form a video sequence of consecutive three dimensional images.

9. A method according to any of the claims 6 to 8, **characterized in** further comprising the step of transmitting said first and second image recorded by the first and second camera means (10, 12; 13; 14) to a processing device.

10. Method according to any of the claim 6 to 9, **characterized in that** the method further comprises the steps of projecting a representation of a user interface to a surface, focusing and/or directing the first and second camera means (10, 12; 13; 14) so as to record images of the projected representation, means for recording and storing consecutive pairs of images, said pairs consisting of a first and a second image, respectively, recorded simultaneously by the first and second camera means (10, 12; 13; 14), respectively, and means for converting differences between said consecutive pairs of images into input to the portable communication device.

11. Use of a portable communication device (100) according to any of the claims 1 to 4 for personal identification.

12. Use of a portable communication device (100) according to claim 5 for providing a virtual user interface.
